# EUROPÄISCHE PATENTSCHRIFT

(11) **EP 1 271 038 B1**
(45) Veröffentlichungstag und Bekanntmachung des Hinweises auf die Patenterteilung: **17.08.2005**
(21) Anmeldenummer: 02010807.2
(22) Anmeldetag: 15.05.2002
(51) Int. Cl.: F16L 19/065

(54) **Rohrverschraubung**
Threaded tube connector
Raccord vissé pour tubes

(30) Priorität: 15.06.2001 DE 10128851
(43) Veröffentlichungstag der Anmeldung: 02.01.2003
(73) Patentinhaber: Gressel AG, 8355 Aadorf (CH)
(72) Erfinder: Baumgartner, Hans Dipl.-Ing (HTL), 8125 Zollikerberg (CH)
(74) Vertreter: Schwarz, Thomas, Dipl.-Ing.

(56) Entgegenhaltungen:
- DE-U- 8 716 394
- GB-A- 420 197
- GB-A- 546 356

## Beschreibung

Die Erfindung betrifft eine Rohrverschraubung nach dem Oberbegriff des Anspruchs 1.

Eine derartige Rohrverschraubung ist aus der US 2,542,583 bekannt. Diese enthält eine Aufnahmehülse für ein armiertes Kabel oder ein Rohr, eine mit der Aufnahmehülse verschraubbare Spannbuchse und einen innerhalb der Aufnahmehülse angeordneten Klemmring aus Metall, durch den das armierte Kabel bzw. das Rohr über eine zusätzliche Dichtung abgedichtet mit der Aufnahmehülse verbunden ist. Die Aufnahmehülse enthält einen radial einwärts gerichteten Ringbund mit einer Durchgangsbohrung zur vollständigen Durchführung des Kabels oder Rohrs und einer inneren Anlagefläche für den Klemmring. Bei dieser bekannten Rohrverschraubung liegt die Aufnahmehülse frei und die Spannbuchse ist an einer Durchgangsöffnung einer festen Trenn- oder Zwischenwand befestigt.

In der US 762,545 ist eine Rohrverbindung offenbart, die ein um 90° abgewinkeltes Anschlussteil mit beidseitigen Befestigungsgewinden für Anschlussmuffen aufweist. Innerhalb der mit einem Ringbund versehenen Anschlussmuffen ist ein geschlitzter Klemmring angeordnet, durch den die Rohrenden beim Aufschrauben der Anschlussmuffen an dem winkelförmigen Anschlussteil gehalten werden.

Aus der CH 351 807 ist eine weitere Rohrverschraubung bekannt. Zur lösbaren und abgedichteten Rohrverbindung wird dort ein auf dem Rohrende angeordneter metallischer Klemmring zwischen zwei gegeneinander verschraubbaren Kupplungsgliedern verspannt. Der aus Kupfer bestehende Klemmring weist an einem Ende einen radial nach innen ragenden Ringbund mit einer inneren Anlagefläche auf, an der das zu verbindende Rohrende zur Anlage gelangt. Am anderen Ende des Klemmrings ist eine konische Außenfläche vorgesehen, die mit einer entsprechenden Gegenfläche des als Anschlußmuffe oder Fitting ausgeführten Kupplungsglieds zusammenwirkt. Durch das Verspannen des Klemmrings zwischen den beiden Kupplungsgliedern wird eine radiale Verengung am konischen Ende des Klemmrings und damit eine Einschnürung am Rohrende erzeugt, wodurch eine feste und dichte Verbindung zwischen dem Rohrende und dem Anschlußteil erreicht wird. Eine derartige Rohrverbindung mit metallischer Abdichtung hat sich auch bei hohen Temperaturen und größeren Temperaturwechseln bewährt. Allerdings besteht bei einer solchen Ausführung der Nachteil, daß ein durch das Rohr transportiertes Medium mit metallischen Anschlußteilen und auch mit dem Ringbund des aus Metall bestehenden Klemmrings in Kontakt gelangt. Dadurch können Metallteile aus den Verbindungselementen gelöst werden, was gerade bei Anwendungen im Lebensmittelbereich unerwünscht ist.

Rohrverschraubungen mit nichtmetallischen Anschlußstücken und einer metallischen Überwurfmutter haben sich als ungenügend erwiesen, da die Dichtheit besonders bei hohen Temperaturen nicht gewährleistet ist. Auch Rohrverbindungen mit elastischen Dichtelementen in Form von O-Ringen sind für hohe Temperaturen nicht geeignet. Außerdem können die üblicherweise aus Elastomer bestehenden O-Ringe besonderes bei längerem Gebrauch von Feststoffen in dem durch das Rohr transportierten Medium unterwandert werden, was zu Leckageproblemen führt.

Aufgabe der Erfindung ist es, eine Rohrverschraubung der eingangs genannten Art zu schaffen, die eine metallisch abdichtende und lösbare Verbindung von Rohren mit nichtmetallischen Anschlußteilen ermöglicht und einen Kontakt zwischen dem durch das Rohr transportierten Medium und metallischen Verbindungsteilen verhindert.

Diese Aufgabe wird durch eine Rohrverschraubung mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Rohrverschraubung ist eine aus Metall bestehende Aufnahmehülse für das Rohrende in einem nichtmetallischen Anschlußteil fest angeordnet. Dieses Anschlußteil kann z.B. ein aus Kunststoff bestehendes Gehäuse sein, in dem eine oder mehrere Aufnahmehülsen eingebettet sind. Bei einem als Spritzgußteil hergestellten Gehäuse können die Aufnahmehülsen zweckmäßigerweise in das Gehäuse eingegossen sein. Die Aufnahmehülsen können aber auch in entsprechende Bohrungen eines nichtmetallischen Anschlußteils eingeklebt oder auf eine andere Weise mit diesem fest verbunden sein. Die z.B. aus Messing hergestellte Aufnahmehülse enthält an ihrem der Rohreinführungsseite entgegengesetzten Ende einen radial nach innen ragenden Ringbund mit einer durchgehenden Bohrung, durch die das zu befestigende Rohrende vollständig durchgesteckt und so unmittelbar an das Anschlußteil herangeführt werden kann. An der Innenseite des Ringbunds ist eine gerade Anlagefläche für den Klemmring vorgesehen. Der Klemmring weist keinen das Rohrende übergreifenden Bund mit innerer Anschlagfläche auf, so daß das Rohrende vollständig durchgesteckt werden kann. Durch eine derartige Rohrverschraubung ergibt sich der wesentliche Vorteil, daß das Rohrende unmittelbar an ein z.B. aus Kunststoff bestehendes Anschlußstück angeschlossen werden kann und ein durch das Rohr transportiertes Medium somit nicht mit metallischen Verbindungselementen in Berührung gelangt. Die metallische Abdichtung wird durch den zwischen der Aufnahmehülse und der Spannbuchse eingespannten Klemmring erreicht. Durch die Ausbildung der Aufnahmehülse mit einem Ringbund kann sich der Klemmring daran abstützen und die Dichtheit gewährleisten. Die durch das Verspannen des Klemmrings entstehenden Radial- und Axialkräfte werden von der metallischen Aufnahmehülse aufgenommen, so daß auf das nichtmetallische Anschlußstück keine Kräfte wirken. Das Anschlußstück kann so z.B. als Kunststoffgehäuse mit geringerer mechanischen Festigkeit ausgeführt sein. Die Materialeigenschaften des Kunstoffgehäuses können derart gewählt werden, daß ein durch das Rohr geleitete Medium aus diesem keine Stoffe herauslösen kann.

Durch die metallische Dichtung wird eine auch bei hohen Temperaturen und großen Temperaturwechseln beständige und sichere, leckagefreie Abdichtung ermöglicht. Die Durchführung des Rohrendes durch den Klemmring und die Aufnahmehülse schützt die metallischen Teile vor einem Kontakt mit dem Medium. Auf diese Weise wird eine lebensmitteltaugliche Lösung erreicht. Die erfindungsgemäße Rohrverschraubung ist besonders zum Anschluß von einem oder mehreren Rohren an ein nichtmetallisches Gehäuse geeignet. Das Gehäuse kann in unterschiedlichen Formen gefertigt sein, womit auch Rohrverbindungen in mehreren Achsen ausgeführt werden können.

Weitere Besonderheiten und Vorzüge der Erfindung ergeben sich aus der folgenden Beschreibung eines vorteilhaften Ausführungsbeispiels anhand der Zeichnung. Es zeigt:
- **Figur 1**: eine erfindungsgemäße Rohrverschraubung zur Verbindung dreier Rohrenden in einer Seitenansicht;
- **Figur 2**: die in Figur 1 gezeigte Rohrverschraubung im Schnitt;
- **Figur 3**: eine vergrößerte Darstellung des Bereichs B von Figur 2 und
- **Figur 4**: eine Aufnahmehülse der erfindungsgemäßen Rohrverschraubung im Schnitt.

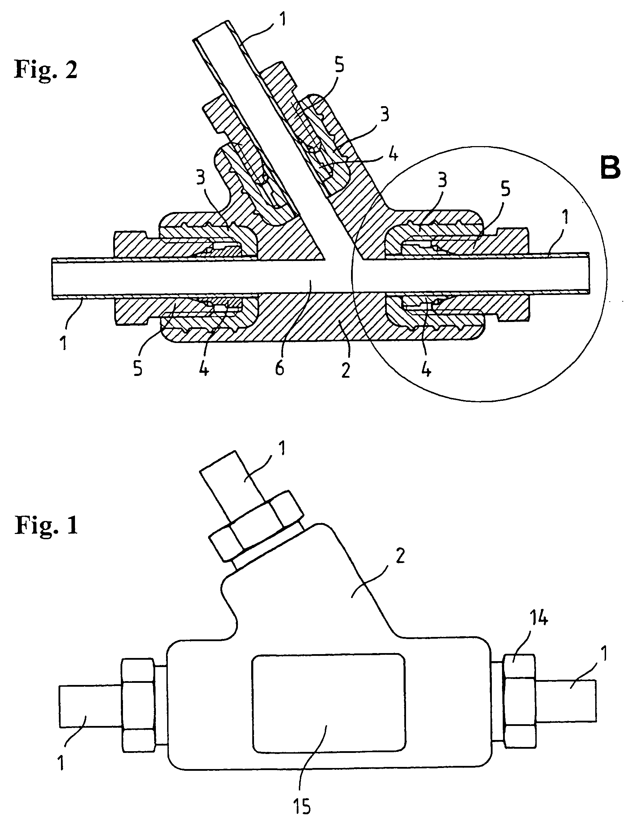

Die in den Figuren 1 und 2 dargestellte Rohrverschraubung ist zur Verbindung dreier Rohrenden 1 konzipiert. Sie enthält drei in einem Kunststoffgehäuse 2 eingebettete Aufnahmehülsen 3 aus Metall, in denen jeweils ein das Rohrende 1 umgebender metallischer Klemmring 4 angeordnet ist. In die Aufnahmehülsen 3 ist jeweils eine mit dem Klemmring 4 zur festen und abgedichteten Halterung des Rohrendes 1 zusammenwirkende Spannbuchse 5 in Form einer Anschlußmuffe eingeschraubt. Innerhalb des Kunststoffgehäuses 2 ist eine verzweigte Verbindungsbohrung 6 zur Verbindung der drei angeschlossenen Rohrenden 1 vorgesehen.

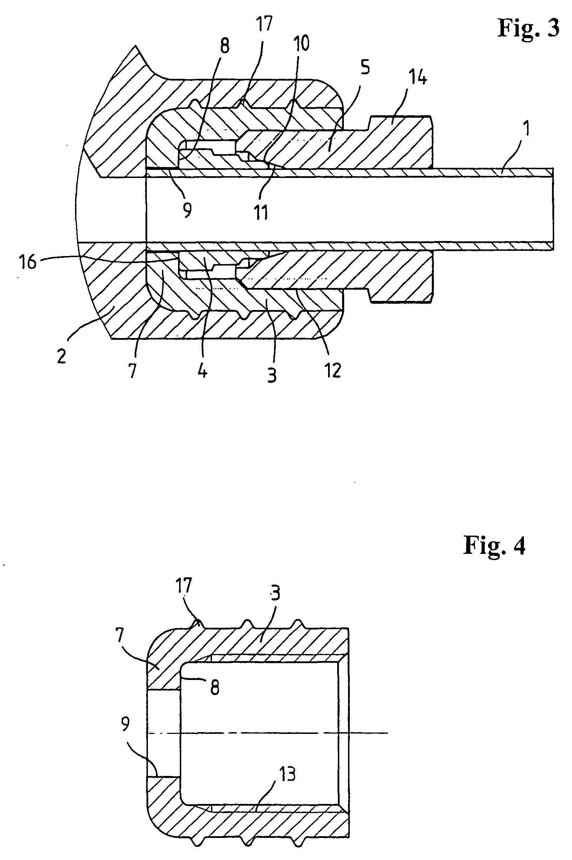

Wie besonders aus den Figuren 3 und 4 hervorgeht, weist die Aufnahmehülse 3 an ihrem innerhalb des Kunststoffgehäuses 2 angeordneten Ende einen radial nach innen weisenden Ringbund 7 mit einer inneren geraden Anlagefläche 8 für den Klemmring 4 und einer Durchgangsbohrung 9 zur Durchführung des Rohrendes 1 auf. Der Innendurchmesser der Durchgangsbohrung 9 ist derart auf den Außendurchmesser des anzuschließenden Rohrendes 1 abgestimmt, das dieses durch die Durchgangsbohrung 9 hindurch unmittelbar an das Kunststoffgehäuse 2 herangeführt werden kann. Ein durch das Rohr transportiertes Medium kann so nicht in Kontakt mit metallischen Verbindungsteilen der Rohrverschraubung gelangen. Bei der gezeigten Ausführung ist der Innendurchmesser der Durchgangsbohrung 9 durchgehend konstant und geringfügig größer ist als der Außendurchmesser des Rohrendes 1.

Auch der Klemmring 4 weist einen über seiner gesamten Länge konstanten Innendurchmesser auf, der geringfügig größer ist als der Außendurchmesser des Rohrendes 1. Dadurch kann das Rohrende 1 vollständig durch den Klemmring 4 durchgeführt werden. An seinem zur Spannbuchse 5 gerichteten Ende weist der Klemmring 4 einen Klemmbereich mit einer konischen Außenfläche 10 auf, die mit einer entsprechenden Gegenfläche 11 an der Innenseite der Spannbuchse 5 in Eingriff gelangt. Bei der dargestellten Ausführung sind der Klemmring 4 und die Spannbuchse 5 in ihrem Eingriffsbereich mehrfach abgestuft.

Die Spannbuchse 5 weist an ihrem innerhalb der Aufnahmehülse 3 angeordneten Teil ein Außengewinde 12 zum Einschrauben in die mit einem Innengewinde 13 versehene Aufnahmehülse 3 auf. Der gegenüber der Aufnahmehülse nach außen vorstehende Teil der Spannbuchse 5 ist mit einem Außensechskant 14 versehen, an dem ein Schraubenschlüssels zum Ein- oder Ausschrauben der Spannbuchse 5 angesetzt werden kann. Zum Gegenhalten sind am Gehäuse 2 gegenüberliegende seitliche Abflachungen 15 vorgesehen.

Beim Einschrauben der Spannbuchse 5 in die Aufnahmehülse 3 wird der Klemmring 5 mit seiner inneren Stirnseite 16 an die Anlagefläche 8 des Ringbunds 7 angedrückt. Gleichzeitig wird der Klemmbereich des Klemmrings 5 über die an der Innenseite der Spannbuchse angeordnete konische Spannfläche 11 radial einwärts gegen die Außenwandung des Rohrendes 1 gedrückt. Dadurch wird eine sichere Halterung des Rohrendes 1 mit einer hohen Dichtwirkung erreicht. Die beim Anzug des Spannbuchse 5 und die Verspannung des Klemmrings 4 entstehenden Axial- und Radialkräfte werden von der aus Metall bestehenden Aufnahmehülse 3 aufgenommen, so daß auf das Gehäuse 2 keine Kräfte wirken. An der Außenseite der Aufnahmehülse 3 können Vertiefungen oder radial nach außen vorstehende Vorsprünge 17 in Form von Ringen oder dgl. vorgesehen sein. Dadurch kann die Halterung der Aufnahmehülse 3 beim Einspritzen in ein Kunststoffgehäuse 2 verbessert werden.

Die Erfindung ist nicht auf das vorstehend beschriebene Ausführungsbeispiel beschränkt. So kann das z.B. aus Kunststoff bestehende nichtmetallische Anschlußteil beliebige Formen aufweisen, um mehrere Rohrenden zu verbinden oder um ein Rohrende an ein nichtmetallisches Anschlußteil anzuschließen.

## Patentansprüche

1. Rohrverschraubung mit mindestens einer Aufnahmehülse (3) für ein Rohrende (1), einer mit der Aufnahmehülse (3) verschraubbaren Spannbuchse (5) und einem innerhalb der Aufnahmehülse (3) angeordneten metallischen Klemmring (4), über den das Rohrende (1) durch Einschrauben der Spannbuchse (5) in die Aufnahmehülse (3) mit dieser abdichtend verbindbar ist, wobei die mindestens eine Aufnahmehülse (3) einen radial einwärts gerichteten Ringbund (7) mit einer zur vollständigen Durchführung des Rohrendes (1) an dessen Außendurchmesser angepaßten Durchgangsbohrung (9) und mit einer inneren geraden Anlagefläche (8) für den Klemmring (4) aufweist, **dadurch gekennzeichnet, daß** die Rohrverschraubung ein nichtmetallisches Anschlußteil (2) zur stirnseitigen Anlage des Rohrendes im vershchraubten zustand enthält, in dem die mindestens eine Aufnahmehülse (3) fest angeordnet ist, daß der Ringbund (7) innerhalb des nichtmetallischen Anschlußteils (2) liegt und daß die Innenkontur des Klemmrings (4) zur vollständigen Durchführung des Rohrendes (1) an dessen Außenkontur angepaßt ist.

2. Rohrverschraubung nach Anspruch 1, **dadurch gekennzeichnet, daß** das Anschlußteil ein aus Kunststoff bestehendes Gehäuse (2) ist, in dem eine oder mehrere Aufnahmehülsen (3) zur Aufnahme jeweils eines Rohrendes (1) eingebettet sind.

3. Rohrverschraubung nach Anspruch 2, **dadurch gekennzeichnet, daß** im Gehäuse (2) mehrere Aufnahmehülsen (3) angeordnet sind, die durch eine Verbindungsbohrung (6) innerhalb des Gehäuse (2) miteinander verbunden sind.

4. Rohrverschraubung nach einem der Ansprüche 1 bis 3, **dadurch gekennzeichnet, daß** der Klemmring (4) an seinem der Spannbuchse (5) zugewandten Ende einen Klemmbereich mit mindestens einer konischen Klemmfläche (10) zum Eingriff mit einer entsprechenden Gegenfläche (11) an der Innenseite der Spannbuchse (5) aufweist.

5. Rohrverschraubung nach einem der Ansprüche 1 bis 4, **dadurch gekennzeichnet, daß** der Klemmring (4) und die Spannbuchse (5) mehrfach abgestuft sind.

6. Rohrverschraubung nach einem der Ansprüche 1 bis 5, **dadurch gekennzeichnet, daß** die Spannbuchse (5) ein Außengewinde (12) zum Eingriff in ein entsprechendes Innenwinde (13) an der Innenseite der Aufnahmehülse (3) aufweist.

7. Rohrverschraubung nach einem der Ansprüche 1 bis 6, **dadurch gekennzeichnet, daß** die Aufnahmehülse (3) an ihrer Außenseite radial vorstehende Vorsprünge (17) oder Vertiefungen aufweist.

8. Rohrverschraubung nach einem der Ansprüche 1 bis 7, **dadurch gekennzeichnet, daß** die Durchgangsbohrung (9) einen durchgehend konstanten Innendurchmesser aufweist.

9. Rohrverschraubung nach einem der Ansprüche 1 bis 8, **dadurch gekennzeichnet, daß** der Klemmring (4) einen durchgehend konstanten Innendurchmesser aufweist.

## Claims

1. Threaded tube connector with at least one receiving sleeve (3) for a tube end (1), a clamping bush (5) which can be screwed to the receiving sleeve (3), and a metal clamping ring (4) which is arranged inside the receiving sleeve (3) and by means of which the tube end (1) can be connected into the receiving sleeve (3) sealingly with the latter by screwing in the clamping bush (5), wherein the at least one receiving sleeve (3) exhibits a radially inwardly directed annular collar (7) with a through bore (9) matched to the outside diameter of the tube end (1) for complete passage of the tube end (1), and with an internal straight abutment face (8) for the clamping ring (4), **characterised in that** the threaded tube connector contains a non-metallic connecting part (2) for end abutment of the tube end when screwed in and in which the at least one receiving sleeve (3) is arranged securely, **in that** the annular collar (7) lies inside the non-metallic connecting part (2) and **in that** the internal contour of the clamping ring (4) is matched to the external contour of the tube end (1) for complete passage of the tube end (1).

2. Threaded tube connector according to claim 1, **characterised in that** the connecting part is a housing (2) which is made of plastic and in which one or more receiving sleeves (3) are embedded for receiving a tube end (1) in each case.

3. Threaded tube connector according to claim 2, **characterised in that** a plurality of receiving sleeves (3) are arranged in the housing (2) and connected to one another by a connecting bore (6) inside the housing (2).

4. Threaded tube connector according to one of claims 1 to 3, **characterised in that** at its end facing the clamping bush (5) the clamping ring (4) exhibits a clamping region with at least one conical clamping face (10) for engagement with a corresponding mating face (11) on the inside of the clamping bush (5).

5. Threaded tube connector according to one of claims 1 to 4, **characterised in that** the clamping ring (4) and the clamping bush (5) have multiple steps.

6. Threaded tube connector according to one of claims 1 to 5, **characterised in that** the clamping bush (5) exhibits an external thread (12) for engagement in a corresponding internal thread (13) on the inside of the receiving sleeve (3).

7. Threaded tube connector according to one of claims 1 to 6, **characterised in that** on its outside the receiving sleeve (3) exhibits radially protruding projections (17) or recesses.

8. Threaded tube connector according to one of claims 1 to 7, **characterised in that** the through bore (9) exhibits a continuously constant inside diameter.

9. Threaded tube connector according to one of claims 1 to 8, **characterised in that** the clamping ring (4) exhibits a continuously constant inside diameter.

## Revendications

1. Raccord vissé pour tubes, comprenant au moins une douille de réception (3) pour une extrémité de tube (1), une douille de serrage (5) pouvant être vissée à la douille de réception (3) et une bague de blocage métallique (4) agencée à l'intérieur de la douille de réception (3) et au moyen de laquelle l'extrémité de tube (1) peut être reliée par vissage de la douille de serrage (5) dans la douille de réception (3) de manière étanche avec celle-ci, la au moins une douille de réception (3) présentant une collerette annulaire (7) dirigée radialement vers l'intérieur, laquelle comporte un perçage traversant (9) adapté au diamètre extérieur de l'extrémité de tube (1) pour le passage complet de celle-ci et une surface de contact intérieure droite (8) pour la bague de blocage (4), **caractérisé en ce que** :
- le raccord vissé pour tubes contient une pièce de raccordement non métallique (2) pour le contact frontal de l'extrémité de tube dans l'état vissé, dans laquelle ladite au moins une douille de réception (3) est agencée de manière fixe ;
- la collerette annulaire (7) se trouve à l'intérieur de la pièce de raccordement non métallique (2) ; et
- le contour intérieur de la bague de blocage (4) est adapté au contour extérieur de l'extrémité de tube (1) pour le passage complet de celle-ci.

2. Raccord vissé pour tubes selon la revendication 1, **caractérisé en ce que** la pièce de raccordement est un boîtier (2) constitué de matière plastique dans lequel sont logées une ou plusieurs douilles de réception (3) pour réceptionner respectivement une extrémité de tube (1).

3. Raccord vissé pour tubes selon la revendication 2, **caractérisé en ce que** plusieurs douilles de réception (3) qui sont reliées entre elles à l'intérieur du boîtier (2) par un perçage de liaison (6), sont agencées dans le boîtier (2).

4. Raccord vissé pour tubes selon l'une des revendications 1 à 3, **caractérisé en ce que** la bague de blocage (4) présente sur son extrémité tournée vers la douille de serrage (5) une zone de blocage comportant au moins une surface de blocage conique (10) pour l'engrènement avec une surface opposée correspondante (11) sur la face intérieure de la douille de serrage (5).

5. Raccord vissé pour tubes selon l'une des revendications 1 à 4, **caractérisé en ce que** la bague de blocage (4) et la douille de serrage (5) sont à échelonnement multiple.

6. Raccord vissé pour tubes selon l'une des revendications 1 à 5, **caractérisé en ce que** la douille de serrage (5) présente un filetage extérieur (12) pour l'engrènement dans un filetage intérieur correspondant (13) sur la face intérieure de la douille de réception (3).

7. Raccord vissé pour tubes selon l'une des revendications 1 à 6, **caractérisé en ce que** la douille de réception (3) présente sur sa face extérieure des saillies (17) faisant saillie radialement ou des renfoncements.

8. Raccord vissé pour tubes selon l'une des revendications 1 à 7, **caractérisé en ce que** le perçage traversant (9) présente un diamètre intérieur constant en continu.

9. Raccord vissé pour tubes selon l'une des revendications 1 à 8, **caractérisé en ce que** la bague de blocage (4) présente un diamètre intérieur constant en continu.
